(19) Europäisches Patentamt
European Patent Office
Office européen des brevets

(11) **EP 2 590 351 A2**

(12) **EUROPEAN PATENT APPLICATION**

(43) Date of publication:
**08.05.2013 Bulletin 2013/19**

(51) Int Cl.:
*H04L 5/00* (2006.01)        *H04B 1/00* (2006.01)
*H04W 52/02* (2009.01)

(21) Application number: **12175794.2**

(22) Date of filing: **10.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.11.2011 EP 11306437**

(71) Applicant: **ST-Ericsson SA**
**1228 Plan-les-Ouates (CH)**

(72) Inventors:
• **Sesia, Stefania**
**06330 Roquefort les Pins (FR)**
• **Brunel, Dominique**
**06600 Antibes (FR)**

(74) Representative: **Gray, Peter John Bracey et al**
**Thompson Gray LLP**
**25 Southampton Buildings**
**London Greater London WC2A 1AL (GB)**

(54) **Non-contiguous carrier aggregation**

(57)    A method of operating a wireless communication apparatus (400) comprises selecting, for non-contiguous carrier aggregation of a plurality of carriers, between a single-receiver architecture and a dual-receiver architecture, depending on a level of an interferer in a gap in the carriers.

FIG. 4

**Description**

Field of the Disclosure

The present disclosure relates to methods and apparatus for carrier aggregation in the field of wireless communication, and in particular non-contiguous carrier aggregation. The disclosure has application, in particular but not exclusively, in wireless communication systems and apparatus adapted for operation in accordance with the Third Generation Partnership Project (3GPP) Long Term Evolution (LTE) protocol, such as a User Equipment.

Background to the Disclosure

Carrier aggregation is a technique available for increasing the bandwidth available for communication by employing simultaneously more than one carrier for communication by a single communication device. The carriers may be in different radio frequency bands, in which case they occupy portions of spectrum that are spaced apart, or may occupy contiguous portions of spectrum in a single radio frequency band, or a combination of both possibilities, occupying contiguous portions of different radio frequency bands. A further possibility is that the carriers occupy a single radio frequency band, but not all of the carriers occupy portions of spectrum that are contiguous, there being one or more gaps in the spectrum occupied by the carriers. The present disclosure addresses, in particular, such carrier aggregation in which the carriers are non-contiguous within a single frequency band.

Carrier aggregation has been introduced in release 8 of the 3GPP High Speed Downlink Packet Access protocol, commonly referred to as HSDPA. In release 8 (rel-8) of HSDPA, only two adjacent carriers can be aggregated. Release 9 (rel-9) introduces the possibility to schedule two carriers in two different bands, that is, one carrier in one band and one carrier in an other band, for example band I and band VIII. In release 10 (rel-10) up to four carriers can be aggregated which can be located in the same band, with a maximum of three adjacent carriers being considered, or in two different bands. In LTE, carrier aggregation has been introduced in rel-10. Up to rel-10, only the aggregation of contiguous portions of the spectrum is possible, within one band. With release 11 (rel-11), non-contiguous carrier aggregation is possible.

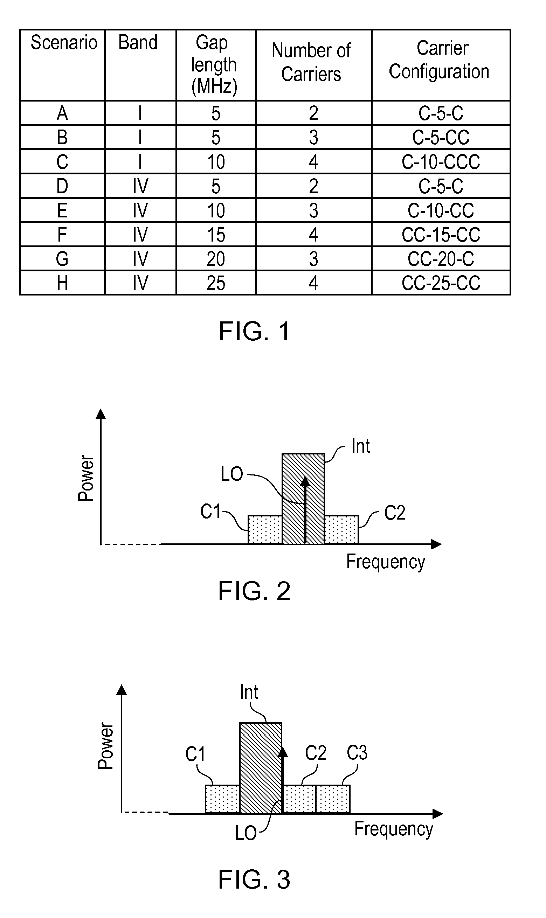

Figure 1 illustrates some configurations of carriers that may be employed for non-contiguous carrier aggregation in the High Speed Downlink Pack Access (HSDPA) protocol. Referring to Figure 1, eight scenarios A to H are represented, with scenarios A to C being applicable in Band I of HSDPA and scenarios D to H being applicable in Band IV of HSDPA. Each carrier occupies 5MHz of spectrum, and the gap between those carriers that may be used for carrier aggregation is, 5MHz, or a multiple of 5MHz. In practice, the gaps may be occupied by carriers belonging to a different communications network. For the purpose of this document, such a carrier that occupies the gap will be referred to as an interferer, interference signal or an unwanted signal, as it carries no information intended for a receiver using the non-contiguous carriers for communication. In scenario A, two carriers separated by a 5MHz gap are aggregated, and this configuration is denoted C-5-C. In scenario B, three carriers are aggregated with a gap of 5MHz between the first and second carriers, which are the two carriers of lowest frequency, and this configuration is denoted C-5-CC. In scenario C, four carriers are aggregated with a 10MHz gap between the first and second carriers, and this configuration is denoted C-10-CCC. Scenario D has an identical configuration to scenario A. Scenario E has three carriers with a 10MHz gap between the first and second carrier, this configuration being denoted C-10-CC. Scenarios F and G both have four carriers and a central gap of 15MHz and 20 MHz, being denoted, respectively, CC-15-CC and CC-20-CC, with the gap being between the second and third carriers. Scenario G has three carriers with a 20MHz gap between the second and third carriers, which are the two carriers of highest frequency, and is denoted CC-20-C. Some of the configurations in Figure 1 span 20MHz or less, and others span more than 20MHz.

Mobile communication networks which conform with the 3GPP LTE protocol can employ carrier spacings of 1.4, 3, 5, 10, 15 and 20MHz, depending on the spectrum conditions and availability, and where such a network implements carrier aggregation, the gap between non-contiguous carriers can be an integer multiple of one of these spacings.

Also, User Equipments (UEs) may implement both HSDPA and LTE technologies and hence reuse of the components between the two different radio access technologies (RATs) is desirable.

As indicated above, the gap between non-contiguous carriers may be occupied by a carrier transmitted by a different communication network, which may be regarded as an unwanted carrier with respect to a receiver receiving the non-contiguous carriers. Such an unwanted carrier may therefore also be regarded as an interference signal. Indeed, it is very likely that an interferer will be present in the gap. The interferer can be from a different operator that may deploy the same radio access technology (RAT) or another RAT in the gap. For example, scenario B in Figure 1 is a typical scenario for Telecom Italia, where the gap is occupied by Vodafone. Moreover, similar power received in the wanted carrier and in the gap cannot be assumed unless geographical co-location of the two operators is possible. This is not the case in practice for most of the operators deploying their network in the same area. So, whereas systems employing carrier aggregation may control the relative levels of the contiguous carriers, with non-contiguous carriers, the level of an interference signal in a gap may not be controllable by the system and may be relatively high.

In a wireless communication network employing carrier aggregation, the selection of carriers to be aggregated may be based on selection criterion that takes account of the signal quality of candidate carriers. For example, a mobile terminal may measure the quality of candidate carriers and report the result of the measurement to a network node, which can then employ the result in selecting the carriers to be aggregated.

In order to reduce the affect of an interference signal in a gap, a receiver may employ dual local oscillators and dual signal paths, with one local oscillator, mixer and filter being used for down-converting carriers which lie on one side of a gap, and a second local oscillator, mixer and filter being used for down-converting carriers which lie on the other side of the gap. Such a receiver can be complex, large, and have relatively high power consumption, in comparison with a receiver arranged for receiving only contiguous carriers.

In order to avoid a high complexity, increased size and higher power consumption of using dual local oscillators and dual signal paths, a receiver with a single local oscillator and single signal path may be tuned to each candidate carrier sequentially to measure signal quality. However, such a scheme can be slow, particularly where many candidate carriers are measured, or where the measurements takes place at intervals during time gaps in ongoing communication.

There is a requirement for improvements to carrier aggregation, and in particular to non-contiguous carrier aggregation.

Summary of the Preferred Embodiments

According to a first aspect, there is provided method of operating a wireless communication apparatus (100), comprising selecting, for non-contiguous carrier aggregation of a plurality of carriers, between a single-receiver architecture and a dual-receiver architecture, depending on a level of an interferer in a gap in the carriers.

According to a second aspect there is provided a wireless communication apparatus operable to select, for non-contiguous carrier aggregation of a plurality of carriers, between a single-receiver architecture and a dual-receiver architecture depending on a level of an interferer in a gap in the carriers.

Therefore, due to the selectable architecture, the single-receiver architecture does not need to be capable of providing an adequate performance under all circumstances, so may be relatively simple and have a low power consumption, and may be used when its performance is sufficient, enabling the second receiver to be switched off. The dual-receiver architecture may be used on those occasions when a higher performance is required, in particular a higher rejection of the interferer. Simulations have shown that a wireless communication apparatus or User Equipment will experience a very high level of interference, where the interference level is 20dB higher than the wanted signal, only up to about 10% of the time. Therefore, the single-receiver architecture may be used 90% of the time and the dual-receiver architecture may be required only 10% of the time.

The wireless communication apparatus may be a User Equipment, in particular, a User Equipment in accordance with at least one of the 3GPP HSDPA and 3GPP LTE protocols.

In a first embodiment, the method according to the first aspect may comprise using the single-receiver architecture for computing a received signal strength of each of the carriers and a received signal strength in the gap, and selecting the dual-receiver architecture for non-contiguous carrier aggregation if the received signal strength in the gap exceeds a predetermined threshold times an average of the received signal strengths of the carriers, and selecting for non-contiguous carrier aggregation the single-receiver architecture otherwise. Likewise, in a first embodiment, the wireless communication apparatus according to the second aspect may be arranged to use the single-receiver architecture for computing a received signal strength of each of the carriers and a received signal strength in the gap, and may be arranged to select the dual-receiver architecture for non-contiguous carrier aggregation if the received signal strength in the gap exceeds a predetermined threshold times an average of the received signal strengths of the carriers, and to select for non-contiguous carrier aggregation the single-receiver architecture otherwise. This selection criterion enables low complexity by basing the selection on a comparison of the signal strengths of the carriers with the signal strength of the interferer.

In a second embodiment, the method according to the first aspect may comprise using the single-receiver architecture for computing for each of the carriers, a received signal strength and a signal to noise-plus-interference ratio, and selecting the dual-receiver architecture for non-contiguous carrier aggregation if the received signal strength of one of the carriers which can be affected by an image of the interferer exceeds a first predetermined threshold times an average of the received signal strengths of the carriers not affected by the image of the interferer and if the signal to noise-plus-interference ratio of the one of the carriers which can be affected by an image of the interferer is less than a second predetermined threshold times an average of the signal to noise-plus-interference ratio of the carriers not affected by the image of the interferer, and selecting for non-contiguous carrier aggregation the single-receiver architecture otherwise. Likewise, in a second embodiment, the wireless communication apparatus according to the second aspect may be arranged to use the single-receiver architecture for computing, for each of the carriers, a received signal strength and an signal to noise-plus-interference ratio, and may be arranged to select the dual-receiver architecture for non-contiguous carrier aggregation if the received signal strength of one of the carriers which can be affected by an image of the interferer exceeds a first predetermined threshold times an average of the received signal strengths of the carriers not affected by the image of the interferer and if the signal to noise-plus-interference ratio of the one of the carriers which can be affected by an image of the interferer is less than a second predetermined threshold times an average of the signal to noise-plus-interference ratio of the carriers not affected by the image of the interferer, and to select for non-contiguous carrier aggregation the single-receiver architecture otherwise. This feature enables the image rejection performance of the single-receiver to be taken into account when selecting between the single-receiver architecture and the dual-receiver architecture, thereby improving the reliability of the selection.

The method according to the first aspect may comprise positioning a local oscillator in the middle of the carriers when employing the single-receiver architecture. Likewise, the wireless communication apparatus according to the second aspect may be arranged to position a local oscillator in the middle of the carriers when employing the single-receiver architecture. This feature enables the single receiver architecture to be adapted to the configuration of carriers, enabling down-conversion to zero frequency and minimisation of the bandwidth after down-conversion.

The method according to the first aspect may comprise employing a first receiver and a second receiver for use in the dual-receiver architecture, and employing one of the first and second receivers when using the single-receiver architecture. Likewise, the wireless communication apparatus according to the second aspect may comprise a first receiver and a second receiver for use in the dual-receiver architecture, and may be arranged to use one of the first and second receivers when using the single-receiver architecture. This feature can reduce complexity.

The method according to the first aspect may comprise switching off the other of the first and second receivers when using the single-receiver architecture. Likewise, the wireless communication apparatus according to the second aspect may be arranged to switch off the other of the first and second receivers when using the single-receiver architecture. This feature can enable reduced power consumption.

The method according to the first aspect may comprise, for the dual-receiver architecture, centring the one of the first and second receivers on the carrier(s) that is/are on one side of the gap and centring the other of the first and second receivers on the carrier(s) that is/are on the other side of the gap. Likewise, the wireless communication apparatus according to the second aspect may be arranged, for the dual-receiver architecture, to centre the one of the first and second receivers on the carrier(s) that is/are on one side of the gap and the other of the first and second receivers on the carrier(s) that is/are on the other side of the gap. This feature can enable both the first and second receivers to employ down-conversion to zero frequency, enabling low complexity.

The method according to the first aspect may comprise measuring, for each of the carriers, a received signal strength and a signal to noise-plus-interference ratio using the dual-receiver architecture, and reporting the measured received signal strength and signal to noise-plus-interference ratio for each of the carriers. Likewise, the wireless communication apparatus according to the second aspect may be further arranged to measure, for each of the carriers, a received signal strength and a signal to noise-plus-interference ratio using the dual-receiver architecture, and arranged to report the measured received signal strength and signal to noise-plus-interference ratio for each of the carriers. This feature enables a reliable measurement of quality in the presence of a high level interferer, and reporting of the measurement to assist the selection of carriers for carrier aggregation.

In a third embodiment, the method according to the first aspect may comprise using a first receiver and a second receiver, wherein the first receiver has a wider bandwidth than the second receiver, and computing a signal to noise-plus-interference ratio of a carrier affected by an image of the interferer, with the first receiver and with the second receiver, and may comprise selecting the single-receiver architecture for non-contiguous carrier aggregation and switching off the second receiver if the signal to noise-plus-interference ratio with the first receiver is equal, within a threshold, to the signal to noise-plus-interference ratio with the second receiver, and selecting the dual-receiver architecture for non-contiguous carrier aggregation if the signal to noise-plus-interference ratio with the first receiver is less than the signal to noise-plus-interference ratio with the second receiver by more than the threshold. Likewise, in a third embodiment, the wireless communication apparatus according to the second aspect may comprise a first receiver and a second receiver, wherein the first receiver has a wider bandwidth than the second receiver, and the wireless communication apparatus may be arranged to compute a signal to noise-plus-interference ratio of a carrier affected by an image of the interferer, with the first receiver and with the second receiver, and may be arranged to select the single-receiver architecture for non-contiguous carrier aggregation and switch off the second receiver if the signal to noise-plus-interference ratio with the first receiver is equal, within a threshold, to the signal to noise-plus-interference ratio with the second receiver, and may be arranged select the dual-receiver architecture for non-contiguous carrier aggregation if the signal to noise-plus-interference ratio with the first receiver is less than the signal to noise-plus-interference ratio with the second receiver by more than the threshold. This feature enables the image rejection performance of the single-receiver to be taken into account when selecting between the single-receiver architecture and the dual-receiver architecture, thereby improving the reliability of the selection.

The method according to the first aspect may comprise centring a bandwidth of the second receiver on the carrier(s) that is/are on one side of the gap that can be affected by an image of the interferer. Likewise, the wireless communication apparatus according to the second aspect may be arranged to centre a bandwidth of the second receiver on the carrier(s) that is/are on one side of the gap that can be affected by an image of the interferer. This feature enables low complexity by enabling the use of down-conversion to zero frequency for the second receiver.

In the method according to the first aspect, the selecting between the single-receiver architecture and the dual-receiver architecture, depending on a level of an interferer in a gap in the carriers, may be responsive to a received request. Likewise, the wireless communication apparatus according to the second aspect may be operable to select between the single-receiver architecture and the dual-receiver architecture depending on a level of an interferer in a gap in the carriers in response to a received request. This enables the selection to be performed only when the use of carrier aggregation is potentially imminent, thereby enabling power to be conserved at other times.

The plurality of carriers may comprise a first, second and third carrier, and the gap may be between the first and second carrier.

According to a third aspect there is provided a wireless communication apparatus (100) for receiving simultaneously a plurality of carrier signals at different frequencies, wherein at least two of the carrier signals are separated in the frequency domain by a gap, comprising a selection stage for selecting between a single-receiver architecture and a dual-receiver architecture depending on a level of an interference signal in the gap, wherein the single-receiver architecture comprises a first mixer and a first oscillator arranged to down-convert the plurality of carriers and the interference signal simultaneously, and the dual-receiver architecture comprises the first mixer and the first oscillator arranged to down-convert the carrier signal(s) that is/are on one side of the gap and a second mixer and a second oscillator for down-converting the carrier signal(s) that is/are on the other side of the gap.

According to a fourth aspect these is provided a method of operating a wireless communication apparatus, comprising selecting, for receiving simultaneously a plurality of carrier signals at different frequencies, wherein at least two of the carrier signals are separated in the frequency domain by a gap, between a single-receiver architecture and a dual-receiver architecture, depending on a level of an interference signal in the gap, wherein the single-receiver architecture comprises a first mixer and a first oscillator for down-converting the plurality of carrier signals and the interference signal simultaneously, and the dual-receiver architecture comprises the first mixer and the first oscillator for down-converting the carrier signal(s) that is/are on one side of the gap and a second mixer and a second oscillator for down-converting the carrier signal(s) that is/are on the other side of the gap.

Therefore, due to the selectable architecture, the single-receiver architecture does not need to be capable of providing an adequate performance under all circumstances, so may be relatively simple and have a low power consumption, and may be used when its performance is sufficient, enabling at least part of the second receiver to be switched off. The dual-receiver architecture may be used on those occasions when a higher performance is required, in particular a higher rejection of the interferer.

In one embodiment, the selection stage may comprise: a quality assessment stage arranged to determine, with the single-receiver architecture selected, a received signal strength of each of the carrier signals and a received signal strength in the gap indicative of the level of the interference signal, and a control stage arranged to select between the single-receiver architecture and the dual-receiver architecture for receiving simultaneously the plurality of carrier signals dependent on the received signal strength of each of the carrier signals and the received signal strength in the gap. Likewise, in one embodiment, the method according to the fourth aspect may comprise determining, with the single-receiver architecture selected, a received signal strength of each of the carrier signals and a received signal strength in the gap indicative of the level of the interference signal, and selecting between the single-receiver architecture and the dual-receiver architecture for receiving simultaneously the plurality of carrier signals dependent on the received signal strength of each of the carrier signals and the received signal strength in the gap. This selection criterion enables low complexity, by basing the selection on the signal strength of the carriers and the signal strength of the interferer.

The control stage may be arranged to select the dual-receiver architecture if the received signal strength in the gap exceeds a predetermined threshold times an average of the received signal strengths of the carriers, and to select the single-receiver architecture otherwise. Likewise, the method according to the fourth aspect may comprise selecting the dual-receiver architecture if the received signal strength in the gap exceeds a predetermined threshold times an average of the received signal strengths of the carriers, and selecting the single-receiver architecture otherwise. This selection criterion enables low complexity.

In another embodiment, the selection stage may comprise: a quality assessment stage arranged to determine, with the single-receiver architecture selected, a received signal strength of each of the carrier signals and a signal to noise-plus-interference ratio of each of the carrier signals; and a control stage arranged to select between the single-receiver architecture and the dual-receiver architecture for receiving simultaneously the plurality of carrier signals dependent on the received signal strength of each of the carrier signals and on the signal to noise-plus-interference ratio of each of the carrier signals. Likewise, in another embodiment, the method according to the fourth aspect may comprise determining, with the single-receiver architecture selected, a received signal strength of each of the carrier signals and a signal to noise-plus-interference ratio of each of the carrier signals; and selecting between the single-receiver architecture and the dual-receiver architecture for receiving simultaneously the plurality of carrier signals dependent on the received signal strength of each of the carrier signals and on the signal to noise-plus-interference ratio of each of the carrier signals. The use of both received signal strength and signal to noise-plus interference ratio can improve the reliability of the selection.

The control stage may be arranged to select the dual-receiver architecture if one of the carrier signals occupies, after down-conversion, a frequency range which overlaps with a frequency range occupied, after down-conversion, by an image signal of the interference signal and has a received signal strength which exceeds a first predetermined threshold times an average of the received signal strengths of the carrier signals which occupy, after down-conversion, a frequency range which does not overlap with the frequency range occupied, after down-conversion, by the image signal of the interference signal, and if the signal to noise-plus-interference ratio of the one of the carrier signals which occupies, after down-conversion, the frequency range which overlaps with the frequency range occupied, after down-conversion, by the image signal of the interference signal, is less than a second predetermined threshold times an average of the signal to noise-plus-interference ratio of the carrier signals which occupy, after down-conversion, the frequency range which does not overlap with the frequency range occupied, after down-conversion, by the image signal of the interference signal, and to select the single-receiver architecture otherwise. Likewise, the method according to the fourth aspect may comprise selecting the dual-receiver architecture if one of the carrier signals occupies, after down-conversion, a frequency range which overlaps with a frequency range occupied, after down-conversion, by an image signal of the interference signal and has a received signal strength which exceeds a first predetermined threshold times an average of the received signal strengths of the carrier signals which occupy, after down-conversion, a frequency range which does not overlap with the frequency range occupied, after down-conversion, by the image signal of the interference signal, and if the signal to noise-plus-interference ratio of the one of the carrier signals which occupies, after down-conversion, the frequency range which overlaps with the frequency range occupied, after down-conversion, by the image signal of the interference signal, is less than a second predetermined threshold times an average of the signal to noise-plus-interference ratio of the carrier signals which occupy, after down-conversion, the frequency range which does not overlap with the frequency range occupied, after down-conversion, by the image signal of the interference signal, and selecting the single-receiver architecture otherwise. This feature enables the image rejection capability of the wireless communication apparatus to be taken into account for the selection, thereby improving reliability of the selection.

In a further embodiment, the selection stage may comprise: a quality assessment stage arranged to determine, while the single-receiver architecture is selected, a first signal to noise-plus-interference ratio of a first one of the carrier signals which occupies, after down-conversion, a frequency range which overlaps with a frequency range occupied, after down-conversion, by an image signal of the interference signal, and to determine, while the dual-receiver architecture is selected, a second signal to noise-plus-interference ratio of the first one of the carrier signals; and a control stage arranged to select, for receiving the plurality of carrier signals, the single-receiver architecture if a difference between the first and second signal to noise-plus-interference ratios is less than a threshold, and the dual-receiver architecture otherwise. Likewise, in a further embodiment, the method according the fourth aspect may comprise: determining, while the single-receiver architecture is selected, a first signal to noise-plus-interference ratio of a first one of the carrier signals which occupies, after down-conversion, a frequency range which overlaps with a frequency range occupied, after down-conversion, by an image signal of the interference signal; determining, while the dual-receiver architecture is selected, a second signal to noise-plus-interference ratio of the first one of the carrier signals; and selecting, for receiving the plurality of carrier signals, the single-receiver architecture if a difference between the first and second signal to noise-plus-interference ratios is less than a threshold, and the dual-receiver architecture otherwise. This feature enables the image rejection capability of the wireless communication apparatus to be taken into account in the selection, thereby improving reliability of the selection.

The control stage may be arranged to, in response to selecting the single-receiver architecture, position a frequency of the first oscillator centrally between a lowest frequency one of the carrier signals and a highest frequency one of the carrier signals. Likewise, the method according to the fourth aspect may comprise, in response to selecting the single-receiver architecture, positioning a frequency of the first oscillator centrally between a lowest frequency one of the carriers signals and a highest frequency one of the carrier signals. This feature enables the single receiver architecture to be adapted to the configuration of carriers, enabling down-conversion to zero frequency and minimisation of the bandwidth after down-conversion.

The control stage may be arranged to, in response to selecting the dual-receiver architecture, position a frequency of one of the first and second oscillators centrally between a/the lowest frequency one of the carrier signals and a highest frequency one of the carrier signals which is on the relatively low frequency side of the gap, and position a frequency of the other of the first and second oscillators centrally between a/the highest frequency one of the carrier signals and a lowest frequency one of the carrier signals which is on the relatively high frequency side of the gap. Likewise, the method according to the fourth aspect may comprise, in response to selecting the dual-receiver architecture, positioning a frequency of one of the first and second oscillators centrally between a/the lowest frequency one of the carrier signals and a highest frequency one of the carrier signals which is on the relatively low frequency side of the gap, and positioning a frequency of the other of the first and second oscillators centrally between a/the highest frequency one of the carrier signals and a lowest frequency one of the carrier signals which is on the relatively high frequency side of the gap. This feature can enable both receive paths of the dual-receiver architecture to employ direct down-conversion, enabling low complexity.

The selection stage may be arranged to select between the single-receiver architecture and the dual-receiver architecture for receiving the plurality of carrier signals in response to a received request. Likewise, the method according to the fourth aspect may comprise selecting between the single-receiver architecture and the dual-receiver architecture for receiving the plurality of carrier signals in response to a received request. This enables the selection to be performed only when the use of carrier aggregation is potentially imminent, thereby enabling power to be conserved at other times.

The quality assessment stage may be arranged to determine, for each of the carrier signals, a received signal strength and a signal to noise-plus-interference ratio with the dual-receiver architecture selected, and the wireless communication apparatus, according to the third aspect, may comprise a transmitter arranged to transmit, for each of the carrier signals, an indication of the determined received signal strength and signal to noise-plus-interference ratio. Likewise, the method according to the fourth aspect may comprise determining, for each of the carrier signals, a received signal strength and a signal to noise-plus-interference ratio with the dual-receiver architecture selected, and transmitting, for each of the carrier signals, an indication of the determined received signal strength and signal to noise-plus-interference ratio. This feature enables a reliable measurement of quality in the presence of a high level interferer, and reporting of the measurement to assist the selection of carriers for carrier aggregation.

The selection stage may comprise a power management stage arranged to, when the single-receiver architecture is selected, inhibit flow of power to one of the first mixer and second mixer and to one of the first oscillator and second oscillator. Likewise, the method according to the fourth aspect may comprise, when the single-receiver architecture is selected, inhibiting flow of power to one of the first mixer and second mixer and to one of the first oscillator and second oscillator. This can reduce power consumption.

According to a fifth aspect, there is provided a method of operating a wireless communications network, comprising transmitting from a base station to a wireless communication apparatus a request to perform interfrequency measurements for non-contiguous carrier aggregation. The base station may be a Node B and the wireless communication apparatus may be a User Equipment.

Brief Description of the Drawings

Preferred embodiments will now be described, by way of example only, with reference to the accompanying drawings, in which:

Figure 1 illustrates examples of carrier configurations;
Figures 2 and 3 illustrate example spectra of carrier signals and interference;
Figure 4 is a block schematic diagram of a wireless communication apparatus; and
Figure 5 is a flow chart of a method of operating a wireless communication apparatus.

Detailed Description of Preferred Embodiments

In circumstances where the non-contiguous carriers span less than about 20MHz, it may be beneficial to allow UE or, more generally, a wireless communication apparatus, to use a single receiver structure, that is, to consider a single local oscillator and receiving the complete 20MHz wide configuration with a single receiver, that is, with a single radio frequency (RF) architecture. An alternative solution is to consider an architecture based on dual local oscillators (LOs). However this may be complex and may increase the current consumption.

When a strong interferer is located in the gap between non-contiguous carriers, two effects should be considered:

1. The UE working with a single LO will consider this interferer as wanted signal, that is, the analog front-end filter will not filter this out.
2. The image effect which may affect one of the carriers, depending on the position of the LO. In general, the LO may be located in the middle of the total RF bandwidth.

The image effect is the mixing, during down-conversion, of an unwanted signal, in particular the interferer, into a frequency range occupied by a wanted signal, in particular one or more of the carrier signals. This occurs where, at RF, the wanted signal and the interferer are equidistant from the LO frequency and on opposite sides of the LO frequency. The down-converted interferer overlapping the down-converted wanted signal is referred to as the image signal. The image effect is present when asymmetric scenarios are considered, that is, scenarios in which the gap containing interferer is not positioned centrally among the carriers, and assuming that the LO frequency is arranged to be positioned centrally in the frequency range occupied by the carriers. In case of symmetric scenarios, such as a scenario CxC, where the interferer is located centrally in the occupied frequency range, this effect won't be present if the position of the LO is in the middle of the total RF bandwidth. Figure 2 illustrates a symmetric scenario, corresponding to scenario A in Figure 1. Referring to Figure 2, a first carrier signal C1 and a higher frequency second carrier signal C2 are spaced apart by a gap containing an interferer Int. The LO frequency, referenced in Figure 2 as LO, is positioned centrally in the total bandwidth occupied by the first and second carrier signals C1, C2, that is, centrally in the gap. In this scenario, the image of the interferer overlaps the interferer Int after down-conversion. Figure 3 illustrates an asymmetric scenario, corresponding to scenario B in Figure 1. Referring to Figure 3, the first carrier signal C1 is spaced apart, by gap, from the higher frequency second carrier signal C2 and an even higher frequency third carrier signal C3, and the gap contains the interferer Int. The LO frequency, referenced in Figure 3 as LO, is positioned centrally in the total bandwidth occupied by the first, second and third carrier signals C1, C2, C3, that is, at the boundary between the interferer Int and the second carrier signal C2. The image of the interferer Int overlaps the second carrier signal C2 after down-conversion.

The first effect mentioned above, referred to herein as the 'filtering effect', is present irrespective of the scenario. Considering the filtering effect only, in the symmetric scenario, possibly a reduction of the maximum level of interference, which compensates for the absence of the analogue filter attenuation, is needed compared to the case of receiving a single carrier. If a channel selectivity filter is implemented using an analogue filter only, a substantial reduction of the maximum level of interference is needed, and/or the analogue low-pass filter has to be accompanied by a notch filter that attenuates the interferer. If on the other hand selectivity is provided by a selectivity filter that is a combination of analogue and digital filtering, the amount of needed relaxation may be significantly reduced, since the digital filtering can be applied similar to the contiguous carrier case.

Consider a scenario CxCC. Under this asymmetric scenario the image problem needs to be considered. An image rejection of 25dB can be considered to be practical, hence the power in the wanted carrier will become

$$P' = 10^{\frac{Pwanted}{10}} + 10^{\frac{Pint\,erf-25}{10}} \qquad\qquad (1)$$

where Pwanted is the power of the wanted carrier, in dB, and Pinterf (also abbreviated to Pint) is the power of the interferer Int, also in dB. This model is an approximation as the image will not affect all the frequencies in the wanted carrier in the same way, however this analysis can provide an initial guideline.

Under the conditions specified in the 3GPP specification 25.101 for the Adjacent Channel Selectivity (ACS) test, Cases 1 and 2, the Pint-25 becomes dominant:

In ACS Case 1, $P_{int}$-25 = -52-25 = -77dBm, and $P_{wanted}$ = <REF $\hat{I}_{or}$ >+14

In ACS Case 2, $P_{int}$-25 = -25 -25 = -50dBm, and $P_{wanted}$ = <REF $\hat{I}_{or}$ >+41

where $\hat{I}_{or}$ is the received power spectral density, integrated in a bandwidth of $(1+\alpha)$ times the chip rate and normalized to the chip rate of the downlink signal as measured at the UE antenna connector, and <REF $\hat{I}_{or}$ > is the reference $\hat{I}_{or}$. Note that for Multi-Carrier HSDPA (MC-HSDPA), $\hat{I}_{or}$ is defined for each of the cells individually and is assumed to be equal for both cells unless explicitly stated per cell. If Band I is considered, the <REF $\hat{I}_{or}$ > is -106.7dBm, hence $P_{wanted}$ = -92.7dBm for Case 1 and $P_{wanted}$ = -65.7dBm for Case 2. This shows that the image problem becomes dominant. The selectivity requirements may still be met, however the UE may not be able to fulfill the bit error rate (BER) requirements defined in the specification.

One solution could be to increase the Pwanted value such that the image becomes less dominant, that is, the offset value for the wanted power would be >> 29.7dBm for Case 1 and >> 56.7dBm for Case 2. A second alternative would be to reduce drastically the interferer level. Both the above-mentioned alternatives could be used.

A straightforward implementation of a UE could simply use two local oscillators in order to avoid the image problem. In this case, one RF signal path is provided for carriers at a frequency lower than the interferer Int and a separate RF signal path is provided for carriers at a frequency higher than the interferer Int, with filtering in both signal paths to attenuate the interferer Int in the gap. This can solve the problem, however the use of such a dual receiver is only needed when a very high amount of interference is present in the gap. System level simulations have shown that the percentage of time this happens in a realistic network is very low, depending on the location of the interference source, and can be up 1 or 2% of cell throughput. This means that the second receiver is switched on only to make sure that 1 or 2% of the time the performance is sufficiently good. The remaining 98 or 99 % of the time the power consumption related to the use of a second receiver is unjustified.

An other possible implementation could use a single receiver architecture only. In this case a single RF signal path is provided for all of the non-contiguous carriers and the interferer, and the individual carriers are separated at baseband. The image rejection capability of such a receiver should be sufficiently high to reject a high amount of interference, such that the loss in signal to noise-plus-interference ratio (SINR), caused by the interference, does not dramatically reduce the block error rate (BLER) performance. This can be costly in terms of image rejection processing and can increase complexity.

A further possibility, presented in this disclosure, can consist of optimising the receiver architecture depending on the interference conditions in order to save battery life, complexity and current consumption. The basic idea is for the UE to comprise a dual receiver architecture and the capability to detect a high level of interference in the gap(s), and to switch off the use of the second receiver when this is not needed and the performance using a single receiver is sufficiently good. Before non-contiguous carrier aggregation is scheduled, a network, for example a NodeB, may request the UE to perform inter-frequency measurements on a certain set of carriers in order to schedule non-contiguous carrier aggregation. For example, the NodeB may send a request to the UE: "perform inter-frequency measurements with the goal of non-contiguous carrier aggregation". This signalling can be used in order to enable the UE to optimise the receiver architecture from the start of non-contiguous carrier aggregation. If this signalling is in place, the UE may from the start decide, depending on the interference level, whether to support non-contiguous carrier aggregation with a single receiver or with dual receivers. Alternatively, if such a request is not transmitted to the UE, the UE may start the support of the non-contiguous carrier aggregation with dual receivers, and may then monitor to detect the presence of a high interference level and may decide autonomously to switch on and off the second receiver. During non-contiguous carrier aggregation communication, the UE may monitor the presence of a large interferer in the gap and switch on and off the second receiver when needed. In order to perform this the UE may need an extra Root Raised Cosine (RRC) filter in the digital domain and the possibility to do extra power measurements, such as determine a received signal strength indicator (RSSI), on the gap(s).

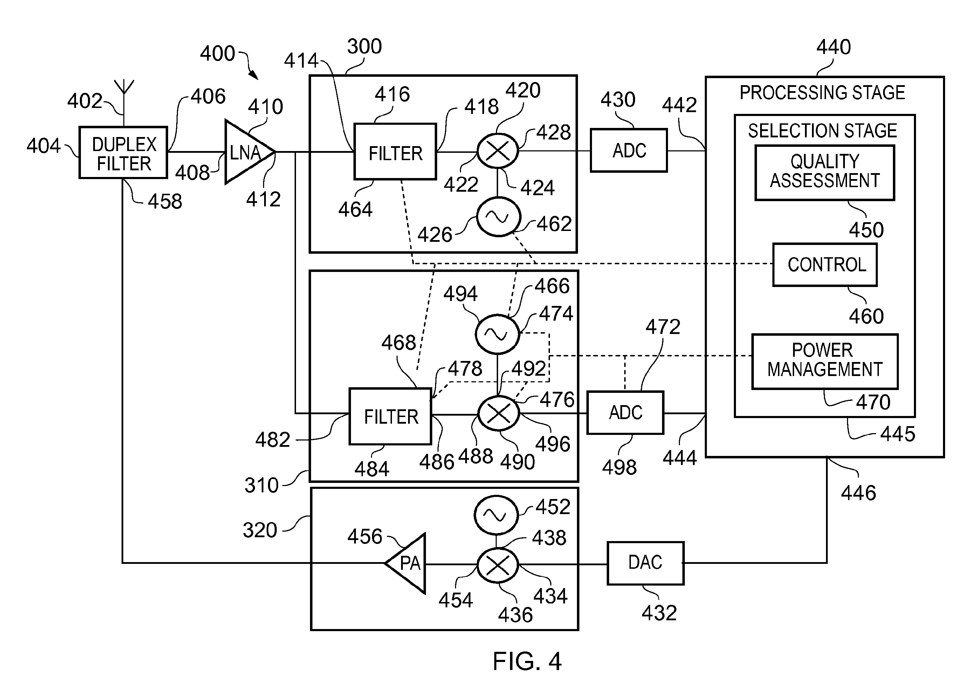

Referring to Figure 4, a wireless communication apparatus 400, which may be, for example, a User Equipment, and in particular an HSDPA or LTE User Equipment, comprises an antenna 402 coupled to a duplex filter 404. An output 406 of the duplex filter 404 is coupled to an input 408 of a low noise amplifier (LNA) 410 for amplifying a received signal detected by the antenna 402.

An output 412 of the LNA 410 is coupled to a signal input 414 of a first filter 416 for filtering the received signal. The first filter 416 has a configurable bandwidth and frequency. A signal output 418 of the first filter 416 is coupled to a first input 422 of a first mixer 420. A second input 424 of the first mixer 420 is coupled to a first oscillator 426 for receiving a first local oscillator signal. The first mixer 420 down-converts the received signal by multiplying the received signal by the first local oscillator signal. An output 428 of the first mixer 420 is coupled to a first input 442 of a processing stage 440, which may be for example a digital signal processor, by means of a first analogue-to-digital converter (ADC) 430 that digitises the down-converted received signal. The wireless communication apparatus 400 comprises a first receiver 300 comprising the first filter 416, first mixer 420 and first oscillator 426.

The output 412 of the LNA 410 is coupled to a signal input 482 of a second filter 484, for filtering the received signal. The second filter 484 has a configurable bandwidth and frequency. A signal output 486 of the second filter 484 is coupled to a first input 488 of a second mixer 490. A second input 492 of the second mixer 490 is coupled to a second oscillator 494 for receiving a second local oscillator signal. The second mixer 490 down-converts the received signal by multiplying the received signal by the second local oscillator signal. An output 496 of the second mixer 490 is coupled to a second input 444 of the processing stage 440 by means of a second ADC 498 that digitises the down-converted received signal. The wireless communication apparatus 400 comprises a second receiver 310 comprising the second filter 484, second mixer 490 and second oscillator 494.

The received signal may comprise a plurality of modulated carrier signals, which for conciseness are referred to simply as carriers or carrier signals. The processing stage 440 is arranged to demodulate one or, if operating in a carrier aggregation mode, a plurality of the carriers received via at least one of the first and second receivers 300, 310. There may be a gap in the carriers that is occupied by an interference signal, also referred to as an interferer.

The processing stage 440 comprises a selection stage 445. The selection stage 445 comprises a quality assessment stage 450 coupled to a control stage 460, and a power management stage 470 coupled to the control stage 460. The quality assessment stage 450 is arranged to determine a quality of the carriers, and is also arranged to determine a signal level of the interference signal in the gap, in the form of a received signal strength indicator (RSSI) or Reference Signal Received Power (RSRP). The control stage 460 is coupled to: a control input 464 of the first filter 416 for controlling the bandwidth and frequency of the first filter 416; a control input 462 of the first oscillator 426 for controlling the frequency of the first local oscillator signal; a control input 468 of the second filter 484 for controlling the bandwidth and frequency of the second filter 484; and a control input 466 of the second oscillator 494 for controlling the frequency of the second local oscillator signal. The control stage 460 is arranged to control these elements dependent on the determined quality of the carriers and the determined signal level of the interference signal, as described below. In Figure 4, the control paths coupling the control stage 460 to these elements are represented by dashed lines.

The power management stage 470 is coupled to a control input 472 of the second ADC 498, a control input 474 of the second oscillator 494, a control input 476 of the second mixer 490, and a control input 478 of the second filter 484. The power management stage 470 is arranged to enable or inhibit the flow of power to these elements, dependent on the control exercised by the control stage 460, as described below. In Figure 4, the control paths coupling the power management stage 470 to these elements are represented by dashed lines. In particular, the control stage 460 can select a single-receiver (1-Rx) architecture or a dual-receiver (2-Rx) architecture for receiving a signal. When the 1-Rx architecture is selected by the control stage 460, the power management stage 470 may inhibit the flow of power to one or more of the second ADC 498, the second mixer 490, the second oscillator 494 and the second filter 484, in order to conserve power. When the 2-Rx architecture is selected by the control stage 460, the power management enables the flow of power to the second ADC 498, the second mixer 490, the second oscillator 494 and the second filter 484.

An output 446 of the processing stage 440 is coupled to a first input 434 of a third mixer 436 by means of a digital-to-analogue converter (DAC) 432 for digitising a signal for transmission. A second input 438 of the third mixer 436 is coupled to a third oscillator 452 for receiving a third local oscillator signal. The third mixer 436 up-converts the signal for transmission by multiplying it by the third local oscillator signal. An output 454 of the third mixer 436 is coupled to an input 458 of the duplex filter 404 by means of a power amplifier (PA) 456 which amplifiers the up-converted signal for transmission, and the amplified signal is emitted from the antenna 402. The wireless communication apparatus 400 comprises a transmitter 320 comprising the third mixer 436, third oscillator 452 and the PA 456.

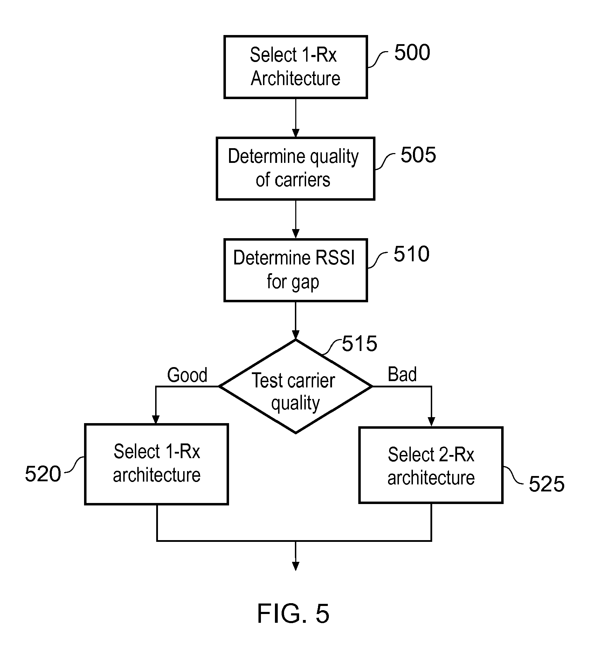

Referring to Figure 5, a method of operating the wireless communication apparatus 400 described with reference to Figure 4 may be performed either prior to a network invoking non-contiguous carrier aggregation, or may be performed at intervals during communication using non-contiguous carrier aggregation. The method comprises, at step 500, the control stage 460 of the selection stage 445 selecting the 1-Rx architecture. If the wireless communication apparatus 400 is already operating with the 1-Rx architecture, this step 500 can be omitted. At step 505, the quality assessment stage 450 determines the quality of the carriers that make up the received signal. At step 510, the quality assessment stage 450 determines the signal level of the interference signal in the gap in the carriers. At step 515, a test is performed to compare the quality of one or more of the carriers to the determined signal level of the interference signal. If the quality is relatively good, according to an assessment criterion, the control stage 460, at step 520, selects the 1-Rx architecture for receiving the carriers, and if the quality is relatively poor, according to the assessment criterion, the control stage 460, at step 525, selects the 2-Rx architecture for receiving the carriers. From steps 520 and 525, flow may either return to step 500, for example if the wireless communication apparatus 400 is already engaged in communication using carrier aggregation, where it may perform step 500 again when a suitable time period arises, or may proceed with further steps. For example, the wireless communication apparatus 400 may transmit a result of the quality assessment of step 505, or of the test of step 515, to a network that may then use the information to schedule, or refrain from scheduling, carrier aggregation for the wireless communication apparatus 400.

In an alternative embodiment, at step 500, the control stage 460 of the selection stage 445 selects the 2-Rx architecture, such that, at step 505, the quality assessment stage 450 determines the quality of the carriers that make up the received signal using the 2-Rx architecture.

In the following paragraphs, examples are presented illustrating various ways for the quality assessment stage 450 to determine, at step 505, the quality of the carriers, various ways for the quality assessment stage 450 to test, at step 515, the carrier quality, and various ways that the control stage 460 may configure the wireless communication apparatus 400 when selecting, at steps 500, 520 and 525, the 1-Rx architecture or the 2-Rx architecture. The examples are presented in the context of the scenario, or configuration, C1xC2C3, where x denotes the gap containing the interferer Int. In the examples, reference to the dual-receiver architecture means using two receivers, one centred on C1, that is, the frequency of one of the first and second oscillators 426, 494 is tuned to the centre frequency of C1, and one centred on C2 and C3, that is, the frequency of the other of the first and second oscillators 426, 494 is tuned to the frequency at the centre of C2 and C3.

The examples are present also for a UE, although they are equally applicable to, more generally, the wireless communication apparatus 400. Likewise, references to a NodeB, which is a base station in a network and may be in accordance with the 3GPP HSDPA or 3GPP LTE protocols, are equally applicable to other elements of a communication network.

Example 1

In response to a request, received from a NodeB, for the UE to perform inter-frequency measurements on a certain set of carriers in order to schedule non-contiguous carrier aggregation, the UE, or wireless communication apparatus 400, performs the following steps:

1. Using the single-receiver architecture, change the position of the single LO during a single measurement period or gap to the middle of configuration C1xC2C3;

2. Compute RSSI and Ec/No for the three wanted carriers, $RSSI_1$, $RSSI_2$, $RSSI_3$, where Ec is the energy of the wanted signal (by default calculated on a common pilot channel), No is noise-plus-interference, and $RSSI_j$ is received

signal strength indicator for carrier j, j=1..3;

3. Compute the RSSI in the gap, $RSSI_G$;

4. Compare $RSSI_G$ with $RSSI_1$, $RSSI_2$, $RSSI_3$ as follows. If RSSIG > A * ($RSSI_1$+ $RSSI_2$ + $RSSI_3$)/3, where A is a predetermined threshold, (note that the equation is in linear domain), use the dual-receiver the single-receiver architecture to start support of non-contiguous carrier aggregation; and

5. Report a RSSI and Ec/No for the three carriers, by transmitting, using the transmitter 320, for each of the carrier signals, an indication of the determined received signal strength and signal to noise-plus-interference ratio (SINR).

In example 1, the quality assessment stage 450 can be arranged to perform steps 2 and 3, and the control stage 460 can be arranged to perform steps 1 and 4. Therefore, the quality assessment stage 450 can be arranged to determine, with the single-receiver architecture selected, a received signal strength of each of the carrier signals and a received signal strength in the gap indicative of the level of the interference signal, and the control stage 460 can be arranged to select between the single-receiver architecture and the dual-receiver architecture for receiving simultaneously the plurality of carrier signals dependent on the received signal strength of each of the carrier signals and the received signal strength in the gap. Furthermore, the control stage 460 can be arranged to select the dual-receiver architecture if the received signal strength in the gap exceeds a predetermined threshold times an average of the received signal strengths of the carrier signals, and to select the single-receiver architecture otherwise.

Example 2

In response to a request, received from a NodeB, for the UE to perform inter-frequency measurements on a certain set of carriers in order to schedule non-contiguous carrier aggregation, the UE performs the following steps:

1. Using the single-receiver architecture, change the position of the single LO during a (single) measurement time period or gap to the middle of configuration C1xC2C3;

2. Compute RSSI and Ec/No for the three wanted carriers, $RSSI_1$, $RSSI_2$, $RSSI_3$, Ec/No1, Ec/No2 and Ec/No3, where Ec/Noj is the signal to noise-plus-interference ratio for carrier j, j=1..3;

3. Compare $RSSI_1$, $RSSI_2$ and $RSSI_3$ and Ec/No1, Ec/No2 and Ec/No3 as follows. Depending on the configuration, the UE knows a priori which carrier can be affected by the image problem; in this example this is C2. In general let's call $C_{image}$ the carrier which can be affected by the image problem and $C_{noimage}$ the set of carriers not affected by image problem, hence if $RSSI_{Cimage} > A * E_{Cnoimage}[RSSI]$ and $Ec/No_{Cimage} < B * E_{Cnoimage}[Ec/No]$ where A and B are predefined thresholds, , where $Ec/No_{Cimage}$ is the signal to noise-plus-interference ratio for the carriers that can be affected by the image problem, and E[.] is the average operators, use the dual-receiver architecture to start support of non-contiguous carrier aggregation. Otherwise, use the single-receiver architecture to start support of non-contiguous carrier aggregation. $RSSI_{Cimage}$ is the RSSI of a carrier that can be affect by the image problem, that is, has a frequency that overlaps with the image of the interference signal, $E_{Cnoimage}[RSSI]$ is the average of the received signal strength indicators of those carriers that are not affected by the image of the interference signal, and $E_{Cnoimage}[Ec/No]$ is the average of the signal to noise-plus-interference for those carriers that are not affected by the image of the interference signal. The predetermined threshold A in example 2 is not necessarily the same as the predetermined threshold A in example 1.

In example 2, the quality assessment stage 450 can be arranged to perform step 2, and the control stage 460 can be arranged to perform steps 1 and 34. Therefore, the quality assessment stage can be arranged to determine, with the single-receiver architecture selected, a received signal strength of each of the carrier signals and a signal to noise-plus-interference ratio of each of the carrier signals, and the control stage can arranged to select between the single-receiver architecture and the dual-receiver architecture for receiving simultaneously the plurality of carrier signals dependent on the received signal strength of each of the carrier signals and on the signal to noise-plus-interference ratio of each of the carrier signals.

Furthermore, the control stage can be arranged to select the dual-receiver architecture if one of the carrier signals occupies, after down-conversion, a frequency range which overlaps with a frequency range occupied, after down-conversion, by an image signal of the interference signal and has a received signal strength which exceeds a first predetermined threshold times an average of the received signal strengths of the carrier signals which occupy, after down-conversion, a frequency range which does not overlap with the frequency range occupied, after down-conversion, by the image signal of the interference signal, and if the signal to noise-plus-interference ratio of the one of the carrier signals which occupies, after down-conversion, the frequency range which overlaps with the frequency range occupied, after down-conversion, by the image signal of the interference signal, is less than a second predetermined threshold times an average of the signal to noise-plus-interference ratio of the carrier signals which occupy, after down-conversion, the frequency range which does not overlap with the frequency range occupied, after down-conversion, by the image signal of the interference signal; and to select the single-receiver architecture otherwise.

In an extension of example 2, the UE can use a second measurement period, or gap, for the quality assessment stage 450 to re-measure the RSSI and Ec/No on the three carriers using the dual-receiver architecture and the UE reports the RSSI and Ec/No for the three carriers, by transmitting, using the transmitter 320, for each of the carrier signals, an indication of the determined received signal strength and signal to noise-plus-interference ratio.

In a further extension of example 2, the UE can de-bias the $RSSI_{Cimage}$ and $Ec/No_{Cimage}$ and report the de-biased RSSI and Ec/No of the three carriers by transmitting, using the transmitter 320, for each of the carrier signals, an indication of the de-biased received signal strength and de-biased signal to noise-plus-interference ratio. The de-biasing refers to subtracting image interference from the RSSI and No of the carriers that are affected by image interference. This consists of applying the image rejection equation provided in equation (1), and can be performed by the quality assessment stage 450.

Example 3

If the signalling is not in place, that is, if the NodeB does not request the UE to perform the inter-frequency measurements before scheduling non-contiguous carrier aggregation, the UE can start supporting the scheduled non contiguous carrier aggregation configuration by using the dual-receiver architecture and operating in accordance with example 7 or 8 during the communication to reduce power consumption by optimizing its receiver when the interference level in the gap is below a certain threshold.

Example 4

If the signalling is not in place, that is, if the NodeB does not request the UE to perform the inter-frequency measurements before scheduling non-contiguous carrier aggregation, the UE can autonomously decide to use a single measurement period, or gap, in order to perform the measurements. It can use the steps of example 1 or example 2 in order to detect the presence of the interferer Int in the gap and store the information generated during those steps, and can use the extension or further extension of example 2 in order to report the correct RSSI and Ec/No for the three carriers.

Example 5

During non-contiguous carrier aggregation communication, if the UE is using the single-receiver architecture, the UE can constantly perform the following steps:

1. Compute RSSI and Ec/No for the three wanted carriers, $RSSI_1$, $RSSI_2$, $RSSI_3$;
2. Compute the RSSI in the gap $RSSI_G$;
3. Compare $RSSI_G$ with $RSSI_1$, $RSSI_2$, $RSSI_3$ as follows. If $RSSI_G > A * (RSSI_1 + RSSI_2 + RSSI_3)/3$ as in example 1, (note that the equation is in linear domain), switch on the second receiver, otherwise do not change the architecture.

As in example 1, the quality assessment stage 450 can perform steps 1 and 2, and the control stage can perform step 3.

Example 6

During non-contiguous carrier aggregation communication, if the UE is using the single-receiver architecture, the UE can constantly perform the following steps:

1. Compute RSSI and Ec/No for the three wanted carriers, $RSSI_1$, $RSSI_2$, $RSSI_3$, Ec/No1, Ec/No2 and Ec/No3
2. Compare $RSSI_1$, $RSSI_2$ and $RSSI_3$ and Ec/No1, Ec/No2 and Ec/No3 as follows. Depending on the configuration the UE knows a priori which carrier can be affected by the image problem, in this example this is C2. As in Example 2, calling $C_{image}$ the carrier that can be affected by the image problem and $C_{noimage}$ the set of carriers not affected by image problem, hence if $RSSI_{Cimage} > A * E_{Cnotimage}[RSSI]$ and $Ec/No_{Cimage} < B \, E_{Cnotimage}[Ec/No]$ as in example 2, where A and B are predefined thresholds and E[.] is the average operators, switch on the second receiver, thereby invoking the dual-receiver architecture. Otherwise, the UE does not change the architecture, retaining the singe-receiver architecture. As in Example 2, step 1 can be performed by the quality assessment stage 450 and step 2 can be performed by the control stage 460.

Example 7

During non-contiguous carrier aggregation communication, depending on the scenario, also referred to as configuration, the UE knows which carrier could be affected by the image problem. In the present example scenario, C1xC2C3, it is carrier C2. During non-contiguous carrier aggregation communication, if the UE is using the dual-receiver architecture, the UE can constantly perform the following steps in order to monitor the presence of the interferer in the gap:

1. Increase the bandwidth of one of the two receivers, that is, the first receiver 300 or the second receiver 310, by choosing the receiver used for reception of the carrier(s) that won't be affected by the image problem. In this example, the UE increases the bandwidth of the receiver centred in C2, for example the first receiver 300. One time slot, or period, is required to change the position of the LO, that is, the first oscillator 426;

2. Change the LO, that is, the frequency of the first oscillator 426, by putting it in the middle of the whole configuration C1, C2 and C3;

3. Use the steps of example 5 or example 6 to detect the presence of the interferer Int in the gap;

4. If there is not a substantial amount of interference, the UE can switch off the second receiver 310 used previously to receive C2 and C3. The interference is considered to be substantial if $RSSI_G > A * (RSSI_1 + RSSI_2 + RSSI_3)/3$, as in example 1 and example 5, or alternatively if $RSSI_{Cimage} > A * E_{Cnotimage}[RSSI]$ and $Ec/No_{Cimage} < B\ E_{Cnotimage}[Ec/No]$ as in example 2 and example 6;

5. If there is a substantial amount of interference, the UE can revert back to the original dual-receiver architecture, that is, one of the first and second receivers 300, 310 centred on carrier C1 and the other of the first and second receivers 300, 310 centred on C2-C3.

Steps 1, 2, 4 and 5 of example 7 can be performed by the control stage 460.

Example 8

In this example, the UE is using the dual-receiver architecture. In order to avoid the problem highlighted in example 7, namely the requirement for one time slot, or period, to change the position of the LO, that is, the first oscillator 426, one of the first and second receivers 300, 310 can be a wideband 20MHz receiver used to receive the carrier(s) that are not affected by the image problem, and more specifically the carriers that are on the side of the gap that is not affected by the image of the interferer Int. Therefore, in this example the wideband receiver is used to receive the carrier C1 and the LO is positioned in the middle of the C1xC2C3 configuration. This receiver is used only for the demodulation of C1, by digitally filtering only C1, even though the analogue front end will receive also the signal located in the gap and in carriers C2 and C3. The other of the first and second receivers 500, 510 can be a narrower bandwidth receiver and is used to receive the signal which can be affected by the image problem. More specifically, it is used to receive the carriers that are on the side of the gap that can be affected by the image of the interferer Int. Therefore, in this example the narrower bandwidth receiver, having a bandwidth of 10MHz in this example, is used to receiver C2 and C3, and its oscillator is centred on C2-C3, that is, at the boundary between C2 and C3. Therefore, to provide the wideband receiver, one of the first and second filters 416, 484, which are analogue filters, can have a bandwidth of 20MHz, and, to provide the narrower bandwidth receiver, the other of the first and second filters 416, 484 can have a narrower bandwidth of 10MHz in this example. In particular, the first filter 416 can have a wideband width, specifically, 20MHz, and the second filter 484 can have a narrower bandwidth of 10MHz.

In this example, the UE performs the following steps in order to detect whether the narrower bandwidth receiver can be switched off:

1. Use the steps of example 5 or example 6 to detect the presence of the interferer in the gap;

2. If there is not a substantial amount of interference, the UE can switch off the second receiver 510 used previously to receive C2 and C3. The interference is considered to be substantial if $RSSI_G > A * (RSSI_1 + RSSI_2 + RSSI_3)/3$, as in example 1 and example 5, or alternatively if $RSSI_{Cimage} > A * E_{Cnotimage}[RSSI]$ and $Ec/No_{Cimage} < B\ E_{Cnotimage}[Ec/No]$ as in example 2 and example 6;

3. If there is a substantial amount of interference, the UE, and more specifically the control stage 460, retains the dual-receiver architecture.

Alternatively, in this example, the UE, and more specifically the control stage 460, performs the following steps in order to detect whether the narrower bandwidth receiver can be switched off:

1. Compare the Ec/No computed with the wideband receiver, that is, the first receiver 300 (receiver 1), and with the narrower bandwidth receiver, that is, the second receiver 310 (receiver 2) on the carrier which can be affected by image, in this example C2;
2. If they are within a threshold C, that is,
Ec/NoC2Receiver2-C $\leq$ Ec/NoC2Receiver1 $\leq$ Ec/NoC2Receiver2+C

where Ec/NoC2Receiver2 is the signal to noise-plus-interference ratio for C2 measured using the second receiver 310, and Ec/NoC2Receiver1 is the signal to noise-plus-interference ratio for C2 measured using the first receiver 300, then the UE can switch off the narrower bandwidth receiver, and if
Ec/NoC2Receiver1 < Ec/NoC2Receiver2-C or
Ec/NoC2Receiver1 >= Ec/NoC2Receiver2+C,
then the UE does not change its receiver architecture. More specifically, if the signal to noise-plus-interference ratio for carrier C2 when assessed with the first receiver 300 differs from the signal to noise-plus-interference ratio for carrier C2 when assessed with the second receiver 310 by no more than the threshold C, the second receiver 310 is switched off, and if the signal to noise-plus-interference ratio for carrier C2 when assessed with the first receiver 500 is less than the signal to noise-plus-interference ratio for carrier C2 when assessed with the second receiver 510 by more than the threshold C, the dual-receiver architecture is retained. In a variation of this example, received signal strength indications can be determined instead of the signal to noise-plus-interference ratios, and the assessments made based on the received signal strength indications in place of the signal to noise-plus-interference ratios.

Therefore, the quality assessment stage (450) can be arranged to determine, while the single-receiver architecture is selected, a first signal to noise-plus-interference ratio of a first one of the carrier signals which occupies, after down-conversion, a frequency range which overlaps with a frequency range occupied, after down-conversion, by an image signal of the interference signal, and to determine, while the dual-receiver architecture is selected, a second signal to noise-plus-interference ratio of the first one of the carrier signals; and the control stage (460) can be arranged to select, for receiving the plurality of carrier signals, the single-receiver architecture if a difference between the first and second signal to noise-plus-interference ratios is less than a threshold, and the dual-receiver architecture otherwise. In the variation of this example, the quality assessment stage (450) can be arranged to determine, while the single-receiver architecture is selected, a first received signal strength indication of a first one of the carrier signals which occupies, after down-conversion, a frequency range which overlaps with a frequency range occupied, after down-conversion, by an image signal of the interference signal, and to determine, while the dual-receiver architecture is selected, a second received signal indication of the first one of the carrier signals; and the control stage (460) can be arranged to select, for receiving the plurality of carrier signals, the single-receiver architecture if a difference between the first and second received signal strength indications is less than a threshold, and the dual-receiver architecture otherwise.

Also, the control stage 460 can be arranged to, in response to selecting the dual-receiver architecture, position a frequency of one of the first and second oscillators centrally between a/the lowest frequency one of the carrier signals and a highest frequency one of the carrier signals which is on the relatively low frequency side of the gap, and position a frequency of other of the first and second oscillators centrally between a/the highest frequency one of the carrier signals and a lowest frequency one of the carrier signals which is on the relatively high frequency side of the gap.

The power management stage 470 can be arranged to, while the single-receiver architecture is selected, inhibit flow of power to the second mixer and to the second oscillator.

References to the received signal strength of a carrier that may be affected by an image of the interference are intended to include the combined received signal strength of both the carrier and the interference, as these being considered indistinguishable when measuring received signal strength.

Other variations and modifications will be apparent to the skilled person. Such variations and modifications may involve equivalent and other features which are already known and which may be used instead of, or in addition to, features described herein. Features that are described in the context of separate embodiments or examples may be provided in combination in a single embodiment. Conversely, features which are described in the context of a single embodiment or example may also be provided separately or in any suitable sub-combination.

Different references to one embodiment do not necessarily refer to the same embodiment. Similarly, different references to another embodiment do not necessarily refer to the same embodiment. Similarly, different references to a further embodiment do not necessarily refer to the same embodiment.

It should be noted that the term "comprising" does not exclude other elements or steps, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present invention.

**Claims**

1. A method of operating a wireless communication apparatus (400), comprising selecting, for non-contiguous carrier aggregation of a plurality of carriers, between a single-receiver architecture and a dual-receiver architecture, depending on a level of an interferer in a gap in the carriers.

2. A method as claimed in claim 1, wherein the wireless communication apparatus (400) is a User Equipment.

3. A method as claimed in claim 1 or claim 2, comprising:

   using the single-receiver architecture for computing a received signal strength of each of the carriers and a received signal strength in the gap; and
   selecting the dual-receiver architecture for non-contiguous carrier aggregation if the received signal strength in the gap exceeds a predetermined threshold times an average of the received signal strengths of the carriers; and
   selecting for non-contiguous carrier aggregation the single-receiver architecture otherwise.

4. A method as claimed in claim 1 or claim 2, comprising:

   using the single-receiver architecture for computing for each of the carriers, a received signal strength and a signal to noise-plus-interference ratio; and
   selecting the dual-receiver architecture for non-contiguous carrier aggregation
   if the received signal strength of one of the carriers which can be affected by an image of the interferer exceeds a first predetermined threshold times an average of the received signal strengths of the carriers not affected by the image of the interferer and
   if the signal to noise-plus-interference ratio of the one of the carriers which can be affected by an image of the interferer is less than a second predetermined threshold times an average of the signal to noise-plus-interference ratio of the carriers not affected by the image of the interferer; and
   selecting for non-contiguous carrier aggregation the single-receiver architecture otherwise.

5. A method as claimed in any one of claims 1 to 4, comprising positioning a local oscillator (426) in the middle of the carriers when employing the single-receiver architecture.

6. A method as claimed in any one of claims 1 to 5, comprising employing a first receiver (500) and a second receiver (510) for use in the dual-receiver architecture, and employing one of the first and second receivers (500, 510) when using the single-receiver architecture.

7. A method as claimed in claim 6, comprising switching off the other of the first and second receivers (500, 510) when using the single-receiver architecture.

8. A method as claimed in claim 6 or claim 7, comprising, for the dual-receiver architecture:

   centring the one of the first and second receivers (500, 510) on the carrier(s) that is/are on one side of the gap; and
   centring the other of the first and second receivers 500, 510 on the carrier(s) that is/are on the other side of the gap.

9. A method as claimed in any one of claims 1 to 8, comprising:

   measuring, for each of the carriers, a received signal strength and a signal to noise-plus-interference ratio using the dual-receiver architecture; and
   reporting the measured received signal strength and signal to noise-plus-interference ratio for each of the carriers.

10. A method as claimed in claim 1 or claim 2, comprising:

   using a first receiver (300) and a second receiver (310), wherein the first receiver (300) has a wider bandwidth than the second receiver (310); and
   computing a signal to noise-plus-interference ratio of a carrier affected by an image of the interferer, with the first receiver 300 and with the second receiver (310); and
   selecting the single-receiver architecture for non-contiguous carrier aggregation and switching off the second receiver (310) if the signal to noise-plus-interference ratio with the first receiver (300) is equal, within a threshold, to the signal to noise-plus-interference ratio with the second receiver (310); and
selecting the dual-receiver architecture for non-contiguous carrier aggregation if the signal to noise-plus-interference ratio with the first receiver (300) is less than the signal to noise-plus-interference ratio with the second receiver (310) by more than the threshold.

11. A method as claimed in claim 10, comprising centring a bandwidth of the second receiver (310) on the carrier(s) that is/are on one side of the gap that can be affected by an image of the interferer.

12. A method as claimed in any preceding claim, wherein the selecting between the single-receiver architecture and the dual-receiver architecture, depending on a level of an interferer in a gap in the carriers, is responsive to a received request.

13. A method as claimed in any preceding claim, wherein the plurality of carriers comprises a first, second and third carrier, and wherein the gap is between the first and second carrier

14. A wireless communication apparatus (400) operable to select, for non-contiguous carrier aggregation of a plurality of carriers, between a single-receiver architecture and a dual-receiver architecture depending on a level of an interferer in a gap in the carriers.

15. A wireless communication apparatus (400) for receiving simultaneously a plurality of carrier signals at different frequencies, wherein at least two of the carrier signals are separated in the frequency domain by a gap, comprising:

    a selection stage (445) for selecting between a single-receiver architecture and a dual-receiver architecture, depending on a level of an interference signal in the gap, wherein the single-receiver architecture comprises a first mixer (420) and a first oscillator (426) arranged to down-convert the plurality of carrier signals and the interference signal simultaneously, and the dual-receiver architecture comprises the first mixer (420) and the first oscillator (426) arranged to down-convert the carrier signal(s) that is/are on one of a relatively low frequency side and a relatively high frequency side of the gap and a second mixer (490) and a second oscillator (494) arranged to down-converting the carrier signal(s) that is/are on the other of the relatively low frequency side and relatively high frequency side of the gap.

16. A wireless communication apparatus (400) as claimed in claim 15, wherein the selection stage (445) comprises:

    a quality assessment stage (450) arranged to determine, with the single-receiver architecture selected, a received signal strength of each of the carrier signals and a received signal strength in the gap indicative of the level of the interference signal; and
    a control stage (460) arranged to select between the single-receiver architecture and the dual-receiver architecture for receiving simultaneously the plurality of carrier signals dependent on the received signal strength of each of the carrier signals and the received signal strength in the gap.

17. A wireless communication apparatus (400) as claimed in claim 16, wherein the control stage (460) is arranged to select the dual-receiver architecture if the received signal strength in the gap exceeds a predetermined threshold times an average of the received signal strengths of the carrier signals, and to select the single-receiver architecture otherwise.

18. A wireless communication apparatus (400) as claimed in claim 15, wherein the selection stage (445) comprises:

    a quality assessment stage (450) arranged to determine, with the single-receiver architecture selected, a received signal strength of each of the carrier signals and a signal to noise-plus-interference ratio of each of the carrier signals; and
    a control stage (460) arranged to select between the single-receiver architecture and the dual-receiver architecture for receiving simultaneously the plurality of carrier signals dependent on the received signal strength of each of the carrier signals and on the signal to noise-plus-interference ratio of each of the carrier signals.

19. A wireless communication apparatus (400) as claimed in claim 18, wherein the control stage (460) is arranged to select the dual-receiver architecture if
one of the carrier signals occupies, after down-conversion, a frequency range which overlaps with a frequency range occupied, after down-conversion, by an image signal of the interference signal and has a received signal strength which exceeds a first predetermined threshold times an average of the received signal strengths of the carrier signals which occupy, after down-conversion, a frequency range which does not overlap with the frequency range occupied, after down-conversion, by the image signal of the interference signal; and if the signal to noise-plus-interference ratio of the one of the carrier signals which occupies, after down-conversion, the frequency range which overlaps with the frequency range occupied, after down-conversion, by the image signal of the interference signal, is less than a second predetermined threshold times an average of the signal to noise-plus-interference ratio of the carrier signals which occupy, after down-conversion, the frequency range which does not overlap with the frequency range occupied, after down-conversion, by the image signal of the interference signal; and to select the single-receiver architecture otherwise.

20. A wireless communication apparatus (400) as claimed in claim 15, wherein the selection stage (445) comprises:

a quality assessment stage (450) arranged to determine, while the single-receiver architecture is selected, a first signal to noise-plus-interference ratio of a first one of the carrier signals which occupies, after down-conversion, a frequency range which overlaps with a frequency range occupied, after down-conversion, by an image signal of the interference signal, and to determine, while the dual-receiver architecture is selected, a second signal to noise-plus-interference ratio of the first one of the carrier signals; and

a control stage (460) arranged to select, for receiving the plurality of carrier signals, the single-receiver architecture if a difference between the first and second signal to noise-plus-interference ratios is less than a threshold, and the dual-receiver architecture otherwise.

21. A wireless communication apparatus (400) as claimed in any one of claims 16 to 20, wherein the control stage (460) is arranged to, in response to selecting the single-receiver architecture, position a frequency of the first oscillator (426) centrally between a lowest frequency one of the carriers signals and a highest frequency one of the carrier signals.

22. A wireless communication apparatus (400) as claimed in any one of claims 16 to 21, wherein the control stage (460) is arranged to, in response to selecting the dual-receiver architecture, position a frequency of one of the first and second oscillators (426, 494) centrally between a/the lowest frequency one of the carrier signals and a highest frequency one of the carrier signals which is on the relatively low frequency side of the gap, and position a frequency of other of the first and second oscillators (426, 494) centrally between a/the highest frequency one of the carrier signals and a lowest frequency one of the carrier signals which is on the relatively high frequency side of the gap.

23. A wireless communication apparatus (400) as claimed in any one of claims 15 to 22, wherein the selection stage (445) is arranged to select between the single-receiver architecture and the dual-receiver architecture for receiving the plurality of carrier signals in response to a received request.

24. A wireless communication apparatus (400) as claimed in any one of claims 16 to 23, wherein the quality assessment stage (450) is arranged to determine, for each of the carrier signals, a received signal strength and a signal to noise-plus-interference ratio with the dual-receiver architecture selected, and comprising a transmitter (320) arranged to transmit, for each of the carrier signals, an indication of the determined received signal strength and signal to noise-plus-interference ratio.

25. A wireless communication apparatus (400) as claimed in any one of claims 15 to 24, wherein the selection stage (445) comprises a power management stage (470) arranged to, while the single-receiver architecture is selected, inhibit flow of power to the second mixer (490) and to the second oscillator (494).

26. A method of operating a wireless communication apparatus (400), comprising selecting, for receiving simultaneously a plurality of carrier signals at different frequencies, wherein at least two of the carrier signals are separated in the frequency domain by a gap, between a single-receiver architecture and a dual-receiver architecture, depending on a level of an interference signal in the gap, wherein the single-receiver architecture comprises a first mixer (420) and a first oscillator (426) arranged to down-convert the plurality of carriers and the interference signal simultaneously, and the dual-receiver architecture comprises the first mixer (420) and the first oscillator (426) arranged to down-convert the carrier signal(s) that is/are on one side of the gap and a second mixer (490) and a second oscillator (494) arranged to down-convert the carrier signal(s) that is/are on the other side of the gap.

27. A method of operating a wireless communications network, comprising transmitting from a base station to a wireless communication apparatus a request to perform interfrequency measurements for non-contiguous carrier aggregation.

28. A method as claimed in claim 27, wherein the base station is a Node B and the wireless communication apparatus is a User Equipment.

| Scenario | Band | Gap length (MHz) | Number of Carriers | Carrier Configuration |
|----------|------|------------------|--------------------|-----------------------|
| A | I | 5 | 2 | C-5-C |
| B | I | 5 | 3 | C-5-CC |
| C | I | 10 | 4 | C-10-CCC |
| D | IV | 5 | 2 | C-5-C |
| E | IV | 10 | 3 | C-10-CC |
| F | IV | 15 | 4 | CC-15-CC |
| G | IV | 20 | 3 | CC-20-C |
| H | IV | 25 | 4 | CC-25-CC |

FIG. 1

FIG. 2

FIG. 3

FIG. 4

EP 2 590 351 A2

FIG. 5